# EUROPÄISCHE PATENTANMELDUNG

(11) **EP 0 687 694 A2**
(43) Veröffentlichungstag der Anmeldung: **20.12.1995**
(21) Anmeldenummer: 95108798.0
(22) Anmeldetag: 08.06.1995
(51) Int. Cl.: C08F 26/06, C08F 246/00

(54) **Verfahren zur Herstellung von Polymerisaten auf Basis von 1-Vinylimidazolen**

(30) Priorität: 17.06.1994 DE 4421178
(71) Anmelder: BASF AKTIENGESELLSCHAFT, D-67056 Ludwigshafen (DE)
(72) Erfinder: Schade, Christian, Dr., D-67061 Ludwigshafen (DE); Detering, Jürgen, Dr., D-67117 Limburgerhof (DE)

(57) **Zusammenfassung**

Verfahren zur Herstellung von Polymerisaten auf Basis von Vinylimidazolen durch radikalische Fällungspolymerisation in einem organischen Lösungsmittel oder Lösungsmittelgemisch, welches keine aromatischen Gruppen und außer Sauerstoff kein Heteroatom enthält.

## Beschreibung

Die vorliegende Erfindung betrifft ein neues Verfahren zur Herstellung von Polymerisaten auf Basis von 1-Vinylimidazol durch Fallungspolymerisation in Gegenwart radikalbildender Verbindungen.

1-Vinylimidazole werden üblicherweise in wäßriger oder ethanolischer Lösung polymerisiert. Zur Herstellung von höhermolekularen oder vernetzten Polymerisaten oder spezieller Copolymerisate ist es häufig günstiger, nach der Methode der Fällungspolymerisation zu arbeiten.

Aus der EP-A 162 388 ist es bekannt, 1-Vinylimidazol-Copolymere durch Fallungspolymerisation in Benzol herzustellen.

Weiterhin beschreiben A. Chapiro et al, Eur. Polym. J., 24, 1019 (1988), die Fällungspolymerisation von 1-Vinylimidazol in Benzol, Toluol oder Tetrachlorkohlenstoff. Die Herstellung von Copolymerisaten aus 1-Vinylimidazol und 4-Aminostyrol durch Fällungspolymerisation in Benzol wird von R.F.C. Bay et al., Polymer, 32, 2456 (1991), beschrieben.

Die in Tetrachlorkohlenstoff hergestellten Polyvinylimidazole weisen jedoch nur geringe Molekulargewichte auf, während die in Benzol oder Toluol erhaltenen Polymerisate als vernetzte Gele anfallen, deren Aufarbeitung problematisch ist.

Nachteilig an diesem bekannten Verfahren ist außerdem, daß die verwendeten Lösungsmittel toxikologisch sehr bedenklich sind.

Aufgabe der vorliegenden Erfindung war es daher, ein Verfahren zu finden, das den Einsatz von toxikologisch weniger bedenklichen Reaktionsmedien ermöglicht.

Demgemäß wurde ein Verfahren zur Herstellung von Polymerisaten auf Basis von Vinylimidazolen durch Polymerisation eines Monomerengemisches aus
(a) 10 bis 100 Gew.-% einer Verbindung der allgemeinen Formel I 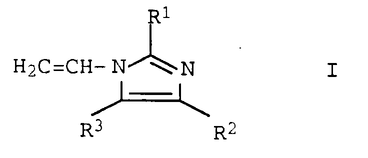 worin R¹, R², R³ gleich oder verschieden sind und für Wasserstoff, C₁-C₁₈-Alkyl oder -Phenyl stehen,
(b) 0 bis 90 Gew.-% eines weiteren radikalisch copolymerisierbaren monoethylenisch ungesättigten Monomeren, und
(c) 0 bis 20 Gew.-% eines Monomeren, welches mindestens zwei nicht konjugierte ethylenisch ungesättigte Doppelbindungen enthält,
in Gegenwart radikalbildender Verbindungen gefunden, welches dadurch gekennzeichnet ist, daß man die Polymerisation in einem organischen Lösungsmittel oder Lösungsmittelgemisch vornimmt, welches keine aromatischen Gruppen und außer Sauerstoff kein Heteroatom enthält und in welchem das entstehende Polymerisat schwerlöslich oder unlöslich ist.

Als Monomere (a) kommen Vinylimidazole der Formel I 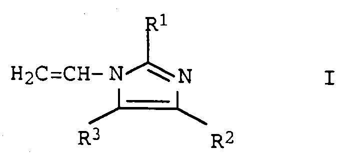
worin R¹, R², R³ gleich oder verschieden sind und für Wasserstoff, C₁-C₁₈-Alkyl- oder Phenyl stehen, in Betracht, beispielsweise 1-Vinylimidazol, 2-Methyl-1-vinylimidazol, 2-Ethyl-1-vinylimidazol, 2-Propyl-1-vinylimidazol, 2-Butyl-1-vinylimidazol, 2,4-Dimethyl-1-vinylimidazol, 2,5-Dimethyl-1-vinylimidazol, 2-Ethyl-4-methyl-1-vinylimidazol, 2-Ethyl-5-methyl-1-vinylimidazol, 2,4,5-Trimethyl-1-vinylimidazol, 4,5-Diethyl-2-methyl-1-vinylimidazol, 4-Methyl-1-vinylimidazol, 4-Ethyl-1-vinylimidazol, 4,5-Dimethyl-1-vinylimidazol, 5-Methyl-1-vinylimidazol, 2,4,5-Triethyl-1-vinylimidazol, 2-Phenyl-1-vinylimidazol, 2-Undecyl-1-vinylimidazol oder 2-Stearyl-1-imidazol. Man kann auch Mischungen der genannten Monomere in beliebigen Verhältnissen einsetzen. Vorzugsweise verwendet werden 1-Vinylimidazol, 2-Methyl-1-vinylimidazol, 4(5)-Methyl-1-vinylimidazol, 2-Ethyl-1-vinylimidazol und 2-Ethyl-4(5)-methyl-1-vinylimidazol als Monomere der Gruppe (a). Ganz besonders bevorzugt werden 1-Vinylimidazol und 2-Methyl-1-vinylimidazol. Die Monomeren werden in Mengen von 10 bis 100 Gew.-%, bevorzugt 25 bis 100 Gew.-% eingesetzt.

Als Monomere (b) kommen weitere radikalisch copolymerisierbare monoethylenisch ungesättigte Monomere oder deren Mischungen in Betracht wie beispielsweise N-Vinyllactame wie N-Vinylpyrrolidon und N-Vinylcaprolactam, N-Vinyloxazolidinon, N-Vinyltriazol, N-Vinyl-N-methyl-acetamid, (Meth)Acrylester wie Methyl-, Ethyl-, Hydroxyethyl-, Propyl-, Hydroxypropyl-, Butyl-, Ethylhexyl-, Decyl-, Lauryl-, i-Bornyl-, Cetyl-, Palmityl-, Phenoxyethyl- oder Stearylacrylat oder die entsprechenden Methacrylate, (Meth)Acrylamide wie Acrylamid, N-Methylolacrylamid, N,N-Dimethylaminopropylacrylamid, N-tert.Butylacrylamide, N-tert.Octylacrylamid, N-Undecylacrylamid oder die entsprechenden Methacrylamide, Vinylester mit 2 bis 30, insbesondere 2 bis 14 Kohlenstoffatomen im Molekül wie Vinylacetat, Vinylpropionat, Vinyllaurat, Neooctansäurevinylester, Neononansäurevinylester, Neodecansäurevinylester, Styrol, Vinyltoluol, α-Methylstyrol, ungesättigte Carbonsäure wie Acrylsäure, Methacrylsäure, Crotonsäure, Maleinsäure, Fumarsäure, Itaconsäure oder ihre entsprechenden Anhydride, 2-Acrylamido-2-methylpropansulfonsäure, Acrylester, die über ein basisches N-Atom verfügen wie Diethylaminoethylacrylat, Dimethylaminoethylacrylat, Diemethylaminopropylacrylat oder die entsprechenden Methacrylester, 2-Vinylpyridin, 4-Vinylpyridin. Besonders bevorzugt werden N-Vinylpyrrolidon, N-Vinylcaprolactam, Alkyl(meth)acrylester, Vinylacetat, Styrol, Acrylsäure, Methacrylsäure, Maleinsäure und Monomere, die über ein basisches N-Atom verfügen. Ganz besonders bevorzugt wird N-Vinylpyrrolidon. Die Monomeren werden in Mengen von 0 bis 90 Gew.-%, bevorzugt 0 bis 75 Gew.-% eingesetzt.

Geeignete Monomere (c) sind solche radikalisch copolymerisierbaren Verbindungen, welche mindestens zwei ethylenisch ungesättigte, nicht konjugierte Doppelbindungen im Molekül enthalten. Geeignete Monomere (c) sind beispielsweise Diacrylate oder Dimethacrylate von mindestens zweiwertigen gesättigen Alkoholen, z.B. Ethylenglykoldiacrylat, Ethylenglykoldimethylacrylat, 1,2-Propylenglykoldiacrylat, 1,2-Porpylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäure- und Methacrylsäureester von Alkoholen mit mehr als 2 OH-Gruppen können als Monomeren (c) eingesetzt werden, z.B. Trimethylolpropantriacrylat oder Trimethylolpropantrimethacrylat. Weiterhin eignen sich Diacrylate oder Dimethacrylate von Polyethylenglykolen oder Polypropylenglykolen mit Molekulargewichten von jeweils 100 bis 9000. Polyethylenglykole bzw. Polypropylenglykole, die für die Herstellung der Diacrylate oder Dimethacrylate verwendet werden, haben vorzugsweise ein Molekulargewicht von jeweils 200 bis 2000. Außer den Homopolymerisaten des Ethylenoxids bzw. Propylenoxids können auch Blockcopolymerisate auf Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z.B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat. Als Vernetzer eignen sich außerdem Vinylester von ethylenisch ungesättigten C₃- bis C₆-Carbonsäuren, z.B. Vinylacetat, Vinylmethacrylat oder Vinylitaconat. Als Vernetzer geeignet sind außerdem Vinylester von mindestens 2 Carboxylgruppen enthaltenden gesättigten Carbonsäuren sowie Di- und Polyvinylether von mindestens zweiwertigen Alkoholen, z.B. Adipinsäuredivinylester, Butandioldivinylether und Trimethylolpropantrivinylether sowie Acrylamide oder Methacrylamide von mindestens zweiwertigen gesättigten Aminen wie beispielsweise Methylen-bis(acrylamid) oder Ethylenbis(methacrylamid). Weitere geeignete Monomere (c) sind Allylester ethylenisch ungesättigter Carbonsäuren, z.B. Allylacrylat und Allylmethacrylat, Allylether von mehrwertigen Alkoholen, z.B. Pentaerythrittriallylether, Triallylsaccharose und Pentallylsaccharose. Außerdem eignen sich als Vernetzer Methylenbismethacrylamid, Divinylethylenharnstoff, Divinylpropylenharnstoff; Divinylbenzol, Divinyldioxan, Tetraallylsilan, Tetravinylsilan, 1,7-Octadien, Diallylphthalat, Trivinylcyclohexan, 1,9-Decadien oder Triallyltriazintrion. Besonders bevorzugt werden Divinylethylenharnstoff, Methacrylsäureallylester, sowie Diacrylate und Dimethacrylate von mindestens zweiwertigen Alkoholen.

Für den Fall, daß die Copolymerisation der vernetzend wirkenden Monomere (c) gewünscht ist, so werden diese in Mengen von 0,01 bis 20 Gew.-%, bevorzugt 0,02 bis 15 Gew.-%, besonders bevorzugt 0,1 bis 8 Gew.-% eingesetzt.

Die Polymerisation wird als Fällungspolymerisation in einem Lösungsmittel durchgeführt, in welchem die Monomeren löslich und die entstehenden Polymerisate schwerlöslich oder unlöslich sind. Als Lösungsmittel werden erfindungsgemäß organische Lösungsmittel eingesetzt, welche keine aromatischen Gruppen tragen und außer Sauerstoff kein Heteroatom enthalten. Als Lösungsmittel kommen vorzugsweise solche in Betracht, die ausgewählt sind aus der Gruppe der gesättigten Kohlenwasserstoffe mit 5 bis 12 C-Atomen, Dialkylether mit 2 bis 12 C-Atomen, der C₃-C₁₂-Ketone und C₁-C₂₂-Alkylester von C₁-C₂₂-Carbonsäuren.

Geeignete Kohlenwasserstoffe sind beispielsweise Pentan, Cyclopentan, Hexan, Cyclohexan, Methylcyclohexan, Heptan, Octan oder Isooctan. Als Ether kommen beispielsweise Dimethylether, Diethylether, Diamylether, tert.-Butyl-methylether oder Dibutylether in Betracht. Als Ketone eignen sich Dialkylketone wie beispielsweise Aceton, Methylethylketon, Diethylketon oder Methylamylketon. Die Reaktion kann auch in Alkoholen wie beispielsweise n-Butanol, 2-Methyl-2-butanol, iso-Amylalkohol, Hexanol, Cyclohexanol, Octanol oder Decanol ausgeführt werden. Geeignete Carbonsäurealkylester sind beispielsweise Ameisensäureethylester, Methylacetat, Ethylacetat, iso-Propylacetat, iso-Butylacetat, Stearylacetat, 2-Ethyl-hexansäure-2-ethylhexylester, Stearinsäuremethylester, iso-Propylmyristat oder iso-Propylpalmitat. Es können auch Mischungen der genannten Lösungsmittel verwendet werden.

Bevorzugte Lösungsmittel sind Pentan, Hexan, Heptan, Cyclohexan, Metyhlcyclohexan, tert.-Butyl-methylether, Aceton, Methylethylketon, n-Butanol, Methylacetat, Ethylacetat, iso-Propylacetat oder iso-Butylacetat. Ganz besonders bevorzugt sind Heptan, Cyclohexan oder Ethylacetat. Die Menge an Lösungsmittel wird vorzugsweise so gewählt, daß die Reaktionsmischung während der Polymerisation gerührt werden kann. Der Feststoffgehalt der Reaktionsmischung liegt vorzugsweise im Bereich von 10 bis 40 Gew.-%

Man kann der Mischung auch geringe Mengen bis zu 10 Gew.-%, vorzugsweise bis zu 4 Gew.-%, besonders bevorzugt bis zu 2 Gew.-%, bezogen auf die eingesetzten Monomere, an Wasser, Methanol, Ethanol, iso-Propanol, Schutzkolloiden oder Emulgatoren zusetzen, um die Morphologie der Produkte oder die Viskosität der Reaktionsmischung günstig zu beeinflussen. Auch andere Eigenschaften der Copolymerisate, z.B. die Restgehalte an Monomeren oder Lösungsmittel während oder nach einem Aufarbeitungsschritt, können so ggf. günstig beeinflußt werden. Geeignete Schutzkolloide sind beispielsweise Polyvinylpyrrolidone, teilverseifte Polyvinylacetate, Celluloseether oder Copolymere aus N-Vinylpyrrolidon und Vinylacetat. Falls bei der Fällungspolymerisation Wasser und/oder Emulgatoren mitverwendet werden, dann nur in solchen Mengen, daß die Mischung aller Komponenten vor dem Beginn der Polymerisation noch homogen erscheint.

Das Molekulargewicht der Copolymerisate kann gewünschtenfalls duch Zugabe von Reglern zur polymerisierenden Mischung erniedrigt werden, beispielsweise Halogenverbindungen wie Tetrachlormethan, Chloroform, Bromtrichlormethan, Allylverbindungen wie Allylalkohol oder 2,5-Diphenyl-1-hexen, Aldehyden, Ameisensäure oder Ameisensäureestern. Bevorzugt werden Polymerisationsregler eingesetzt, die Schwefel in gebundener Form enthalten. Verbindungen dieser Art sind beispielsweise anorganische Hydrogensulfite, Sulfite, Disulfite und Dithionite oder organische Sulfide, Disulfide, Polysulfide, Sulfoxide, Sulfone und Mercaptoverbindungen. Besonders bevorzugt eingesetzt werden Mercaptoalkohole, Mercaptocarbonsäuren und Mercaptoalkane mit zwei bis 30 Kohlenstoffatomen im Molekül, beispielsweise 2-Mercaptoethanol, 1,3-Mercaptopropanol, 3-Mercaptopropan-1,2-diol, 1,4-Mercaptobutanol, Cystein, Mercaptoessigsäure, 3-Mercaptopropionsäure, Mercaptobernsteinsäure, n-Butylmercaptan, n-Hexylmercaptan, n-Dodecylmercaptan oder tert.-Dodecylmercaptan. Falls polymerisationsregler verwendet werden, werden sie in Mengen von 0,1 bis 15, vorzugsweise 0,1 bis 5 Gew.-%, bezogen auf die bei der Polymerisation anwesenden Monomere, eingesetzt.

Die Monomeren werden radikalisch polymerisiert, d.h. zur Initiierung der Homo- oder Copolymerisation benötigt man Verbindungen, die unter den Polymerisationsbedingungen Radikale bilden. Solche Radikale bildenden Initiatoren sind alle üblichen Peroxi- und Azoverbindungen, beispielsweise Peroxide, Hydroperoxide und Peroxiester, wie Wasserstoffperoxid, Dibenzoylperoxid, Di-tert.-butylperoxid, tert.-Butylhydroperoxid, Diacylperoxide wie Dilauroylperoxid, Didecanoylperoxid und Dioctanoylperoxid oder Perester wie tert.-Butylperoctanoat, tert.-Butylperpivalat, tert.-Amylperpivalat oder tert.-Butylperneodecanoat sowie Azoverbindungen wie 2,2'-Azobis(2-amidinopropan)dihydrochlorid, 2,2'-Azo- bis [2-(imidazolin-2-yl)propan]dihydrochlorid, 4,4'-Azobis(4-cyanovaleriansäure), 2,2'-Azobis(2,4-dimethylvaleronitril), 2,2'-Azobisisobutyronitril, 2,2'-Azobis(2-methylbutyronitril), Dimethyl-2,2'-azobis(isobutyrat), 2,2'-Azobis(4-methoxy-2,4-dimethylvaleronitril), 1,1'-Azobis(1-cyclohexancarbonitril), 2,2'-Azobis(2,4,4-trimethyl-pentan) oder 2-(Carbamoylazo)isobutyronitril. Mann kann selbstverständlich auch Initiatorenmischungen oder die bekannten Redoxinitiatoren verwenden. Beispiele für Redoxinitiatoren sind Kombinationen aus mindestns einer Peroxoverbindung wie Kalium-, Natrium- oder Ammoniumpersulfat, Natriumhypochlorit, Natriumperborat, Natriumpercarbonat, Wasserstoffperoxid, tert.-Butylhydroperoxid oder Di-tert.-butylperoxid und mindestens einem Reduktionsmittel wie Ascorbinsäure, Milchsäure, Zitronensäure, Natriumsulfit, Natriumhydrogensulfit, Acetonsulfit, Natriumdithionit, Natrium-N-hydroxymethylsulfinat oder einem tertiären Amin wie Dimethylphenylamin. Die Initiatoren werden in üblichen Mengen eingesetzt, z.B. in Mengen von 0,1 bis 6 Gew.-%, bezogen auf die zu polymerisierenden Monomeren.

Die Fällungspolymerisation wird üblicherweise unter einer Inertgasatmosphäre durchgeführt. Die Polymerisation kann beispielsweise in der Art durchgeführt werden, daß man alle Komponenten, die während der Polymerisation anwesend sind, in einem Polymerisationsgefäß vorlegt, die Reaktion startet und das Reaktionsgemisch gegebenenfalls kühlt, um die Polymerisationstemperatur zu kontrollieren. Man kann jedoch auch so vorgehen, daß man nur einzelne oder einen Teil der Komponenten vorlegt, die Polymerisation startet und den Rest der Komponenten einzeln oder zusammen, in unter Umständen unterschiedlichen Intervallen, je nach Fortschritt der Polymerisation kontinuierlich oder absatzweise zudosiert. Man kann jedoch auch so verfahren, daß man zunächst nur das Verdünnungsmittel vorlegt und die Monomeren und den Polymerisatonsinitiator in separaten Zuläufen in die Vorlage absatzweise oder kontinuierlich einbringt.

Die Temperatur während der Polymerisation liegt im allgemeinen zwischen 40 und 160, vorzugsweise zwischen 50 bis 120°C. Sie kann während der Reaktion nach einem Programm unterschiedlich gesteuert werden. Die Polymerisation wird vorzugsweise unter Atmosphärendruck durchgeführt, kann jedoch auch unter vermindertem oder erhöhtem Druck vorgenommen werden. Sofern die Polymerisationstemperatur oberhalb des Siedepunktes des verwendeten Lösungsmittels liegt, wird die Polymerisation in druckdichten Apparaten bei Drücken bis zu 8 bar durchgeführt.

Der Polymerisationsprozeß wird vorzugsweise so gesteuert, daß das Copolymerisat in Form eines feinteiligen Pulvers anfällt. Die mittlere Korngröße des Polymerisationspulvers beträgt 0,01 bis 500, vorzugsweise 0,5 bis 200 µm. Nach der Polymerisation wird das vernetzte Copolymerisat von den übrigen Bestandteilen der Reaktionsmischung abgetrennt, beispielsweise abfiltriert, abdekantiert oder abzentrifugiert. Das so erhaltene Pulver kann gegebenenfalls weiteren geeigneten Trenn-, Wasch-, Trocknungs- oder Mahlverfahren unterworfen werden.

Die nach dem erfindungsgemäßen Verfahren erhaltenen Polymerisate weisen, soweit sie in Wasser oder einem anderen geeigneten Lösungsmittel löslich sind, vorzugsweise K-Werte im Bereich von 10 bis 200 auf (bestimmt nach H. Fikentscher, Cellulose-Chemie, Band 13, Seiten 58-64 und 71-74 (1932), in wäßriger Lösung bei 25°C und einer Polymerkonzentration von 1 Gew.-%).

Die Polymerisate können im Anschluß an die Reaktion im selben Medium oder nach Isolierung in einem anderen Medium durch ein geeignetes Reagenz in eine quaternisierte Form übergeführt werden. Zur Quaternierung eignen sich beispielsweise Alkylhalogenide mit 1 bis 18 Kohlenstoffatomen im Molekül, z.B. Methylchlorid, Ethylchlorid, Propylchlorid, Hexylchlorid, Dedecylchlorid oder Laurylchlorid sowie Benzylhalogenide wie z.B. Benzylchlord. Selbstverständlich eignen sich auch die entsprechenden Iod- oder Bromverbindungen. Geeignete Quaternisierungsmittel sind weiterhin Dialkylsulfate, insbesondere Dimethylsulfat und Diethylsulfat. In machen Fällen ist es auch ausreichend, die Polymerisate durch Behandlung mit einer Säure in die Salzform überzuführen. Die Quaternisierung kann vollständig oder teilweise erfolgen.

Die erfindungsgemäß erhaltenen Polymerisate können beispielsweise zur Bindung von Gallensäuren im Blut zur Verminderung des Cholersterinspiegels oder als Mittel zur selektiven Entfernung von Schwermetallionen aus Lösungen, als Hilfsmittel in kosmetischen Formulierungen, beispielsweise zur Einstellung des rheologischen Verhaltens, verwendet werden. Die erfindungsgemäßen Polymerisate können weiterhin als Waschmitteladditiv zur Inhibierung der Farbstoffübertragung während des Waschvorgangs verwendet werden.

### Beispiele

### Beispiel 1

In einem 2000 ml fassenden Kolben, der mit einem Rührer, Rückflußkühler, Thermometer und einer Apparatur für das Arbeiten unter Schutzgas ausgestattet war, wurden 400 g Essigsäureethylester, 100 g N-Vinylimidazol, 10 g Divinylethylenharnstoff und 1 g tert.-Butylperpivalat während 2 Stunden bei 72°C gerührt. Das entstandene Produkt wurde über eine Filternutsche abgesaugt, mit 100 g Essigsäureethylester gewaschen und im Vakuumtrockenschrank bei 50°C für 8 Stunden getrocknet. Man erhielt 111 g eines weißen Pulvers mit einer Schüttdichte von 67 g/100 ml und einer mittleren Korngröße von 124 µm.

### Beispiel 2

In einem 2000 ml fassenden Kolben, der mit einem Rührer, Rückflußkühler, Thermometer und einer Apparatur für das Arbeiten unter Schutzgas ausgestattet war, wurden 600 g Cyclohexan, 100 g N-Vinylimidazol, 10 g Divinylethylenharnstoff und 1 g Azobisisobutyronitril während 4,5 Stunden bei 77°C gerührt. Das entstandene Produkt wurde über eine Filternutsche abgesaugt, mit 200 g Cyclohexan gewaschen und im Vakuumtrockenschrank bei 50°C für 8 Stunden getrocknet. Man erhielt 109 g eines weißen Pulvers mit einer Schüttdichte von 6 g/100 ml und einer mittleren Korngröße von 30 µm.

### Beispiel 3

In einem 2000 ml fassenden Kolben, der mit einem Rührer, Rückflußkühler, Thermometer und einer Apparatur für das Arbeiten unter Schutzgas ausgestattet war, wurden 400 g Methylethylketon, 100 g N-Vinylimidazol, 10 g Methacrylsäureallylester und 1 g 2,2'-Azobis(2-methylisobutyronitril) während 2,5 Stunden bei 74°C gerührt. Das entstandene Produkt wurde über eine Filternutsche abgesaugt, mit 100 g Methylethylketon gewaschen und im Vakuumtrockenschrank bei 50°C für 8 Stunden getrocknet. Man erhielt 106 g eines weißen Pulvers mit einer Schüttdichte von 10 g/100 ml und einer mittleren Korngröße von 11 µm.

### Beispiel 4

In einem 2000 ml fassenden Kolben, der mit einem Rührer, Rückflußkühler, Thermometer und einer Apparatur für das Arbeiten unter Schutzgas ausgestattet war, wurden 400 g Cyclohexan, 50 g N-Vinylimidazol, 50 g N-Vinylpyrrolidon und 2 g Divinylethylenharnstoff auf 77°C aufgeheizt. Sobald diese Temperatur erreicht war, wurde während 2 Stunden ein Zulauf von 0,5 g Dimethyl-2,2'-azobisisobutyrat zugetropft. Anschließend wurde die Mischung weitere 4 Stunden bei dieser Temperatur gerührt. Das entstandene Produkt wurde über eine Filternutsche abgesaugt, mit 200 g Cyclohexan gewaschen und im Vakuumtrockenschrank bei 50°C für 8 Stunden getrocknet. Man erhielt 101 g eines weißen Pulvers mit einer Schüttdichte von 32 g/100 ml und einer mittleren Korngröße von 12 µm.

### Beispiel 5

In einem 1000 ml fassenden Kolben, der mit einem Rührer, Rückflußkühler, Thermometer und einer Apparatur für das Arbeiten unter Schutzgas ausgestattet war, wurden 400 g Cyclohexan auf 70°C aufgeheizt. Sobald diese Temperatur erreicht war, wurde während 1 Stunde ein Zulauf von 70 g 1-Methyl-2-vinylimidazol und 0,7 g Mercaptoethanol und parallel dazu während 2 Stunden ein Zulauf von 0,4 g Azobisisobutyronitril in 20 ml Cyclohexan zugetropft. Anschließend wurde die Mischung weitere 4 Stunden bei dieser Temperatur gerührt. Das entstandene Produkt wurde über eine Filternutsche abgesaugt, mit 200 g Cyclohexan gewaschen und im Vakuumtrockenschrank bei 50°C für 8 Stunden getrocknet. Man erhielt 68 g eines weißen Pulvers. Eine Lösung des Polymers in Wasser war klar und farblos und besaß einen K-Wert von 26,2 (bestimmt nach H. Fikentscher, Cellulose-Chemie, Band 13, 58-64 und 71-74 (1932), bei 25°C und einer Polymerkonzentration von 1 Gew.-%).

### Beispiel 6

In einem 2000 ml fassenden Kolben, der mit einem Rührer, Rückflußkühler, Thermometer und einer Apparatur für das Arbeiten unter Schutzgas ausgestattet war, wurden 400 g Ethylacetat, 100 g N-Vinylimidazol und 17,3 g Stearylacrylat auf 70°C aufgeheizt. Sobald diese Temperatur erreicht war, wurde während 2 Stunden ein Zulauf von 1 g tert.-Butylperpivalat in 20 ml Cyclohexan zugetropft. Anschließend wurde die Mischung weitere 4 Stunden bei dieser Temperatur gerührt. Das entstandene Produkt wurde über eine Filternutsche abgesaugt, mit 200 g Cyclohexan gewaschen und im Vakuumtrockenschrank bei 50°C für 8 Stunden getrocknet. Man erhielt 116 g eines weißen Pulvers. Eine Lösung des Polymers in Ethanol besaß einen K-Wert von 31 (bestimmt nach H. Fikentscher, Cellulose-Chemie, Band 13, 58-64 und 71-74 (1932), bei 25°C und einer Polymerkonzentration von 1 Gew.-%).

### Beispiel 7

15 g des Polymerpulvers aus Beispiel 1 wurden in 200 g Ethanol dispergiert und bei 40°C während 30 Minuten mit 30 g Dimethylsulfat versetzt. Anschließend wurde die Mischung auf 60°C erwärmt und weitere 3 Stunden bei dieser Temperatur gerührt. Das Produkt wurde anschließend über ein Filternutsche abgesaugt, mit 100 ml Wasser gewaschen, zweimal in 400 ml einer 10 %igen wäßrigen NaCl-Lösung für 15 Minuten gerührt, erneut abgesaugt, mit zweimal 100 ml Wasser gewaschen und im Vakuumschrank bei 50°C für 8 Stunden getrocknet. Man erhielt 21 g eines Polymerpulvers mit einer Austauschkapazität von 5,8 meq/g.

## Patentansprüche

1. Verfahren zur Herstellung von Polymerisaten auf Basis von Vinylimidazolen durch Polymerisation eines Monomerengemisches aus
(a) 10 bis 100 Gew.-% einer Verbindung der allgemeinen Formel I 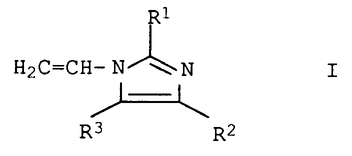 worin R¹, R², R³ gleich oder verschieden sind und für Wasserstoff, C₁-C₁₈-Alkyl oder -Phenyl stehen,
(b) 0 bis 90 Gew.-% eines weiteren radikalisch copolymerisierbaren monoethylenisch ungesättigten Monomeren, und
(c) 0 bis 20 Gew.-% eines Monomeren, welches mindestens zwei nicht konjugierte ethylenisch ungesättigte Doppelbindungen enthält,
in Gegenwart radikalbildender Verbindungen, dadurch gekennzeichnet, daß man die Polymerisation in einem organischen Lösungsmittel oder Lösungsmittelgemisch vornimmt, welches keine aromatischen Gruppen und außer Sauerstoff kein Heteroatom enthält und in welchem das entstehende Polymerisat schwerlöslich oder unlöslich ist.

2. Verfahren nach Anspruch 1, dadurch gekennzeichnet, daß das organische Lösungsmittel oder Lösungsmittelgemisch ausgewählt ist aus der Gruppe der gesättigten Kohlenwasserstoffe mit 5 bis 12 C-Atomen, der Dialkylether mit 2 bis 12 C-Atomen, der C₄-C₁₆-Alkanole, der C₃-C₁₂-Ketone und der C₁-C₂₂-Alkylester von C₁-C₂₂-Carbonsäuren.

3. Verfahren nach Anspruch 1 oder 2, dadurch gekennzeichnet, daß als organisches Lösungsmittel Heptan, Cyclohexan oder Ethylacetat eingesetzt werden.
